# EUROPEAN PATENT APPLICATION

(11) **EP 1 650 657 A2**
(43) Date of publication of application: **26.04.2006**
(21) Application number: 05256487.9
(22) Date of filing: 19.10.2005
(51) Int. Cl.: G06F 11/07

(54) **Intelligent storage of device state in response to error condition**

(30) Priority: 19.10.2004 US 620406 P
(71) Applicant: QUANTUM CORPORATION, San Jose, California 95110 (US)
(72) Inventor: Krasilinec, Michael G., Colorado 80031 (US); Beyer, Matthew D., Colorado 80020 (US); Hamilton, Richard, Colorado 80305 (US); Kindvall, Timothy Joe, Colorado 80021 (US); Schartau, Kristian Scott, Colorado 80021 (US)
(74) Representative: Charig, Raymond Julian

(57) **Abstract**

An algorithm helps ensure recordation of the state corresponding to an error or a catastrophic failure that requires a failing device to be sent to the manufacturer, rather than just the state of a byproduct error or failure or the state of an unrelated error or failure.

## Description

### BACKGROUND OF THE INVENTION

### 1. Field of the Invention

The present invention generally relates to handling errors in a data storage device, and, in particular, to recording the state of the device in response to a device error.

### 2. Related Art

As an aid in determining the root cause error or failure in a device, the state of the device may be recorded. The benefit of recording the state is that it provides a "snapshot" of parameters of the device at the time of the error. For errors that are not easily recreated, capturing the "snapshot" is invaluable in determining why the device erred or failed. Understanding the cause of the error allows the manufacturer/designer to implement preventive measures in the future.

For example, if a device is running in an environment different than a laboratory, an environmental variable, such as temperature, could cause an error or failure to occur which would not be recreated in the lab environment. Capturing data at the time of failure ensures that the temperature value would be recorded in the state, thus allowing a better understanding of the failure. Or, perhaps the software encounters an unexpected value for a variable which results in an undesired software path that had not been previously tested. Capturing the routines that were entered up to the point of the error allows the software engineer to fix any loopholes in the code.

The state may include, for example: uptime for the device; a list of commands that have been previously entered; sensor readings (such as temperature, humidity, etc); mechanical positions, such as head position on tape/disk, motor positions, tach positions; ring buffer information including a list of processes executed by firmware just prior to the error; statistics concerning how long the device has been operational, how many errors have occurred, how many times the device has been cleaned, and average performance; drive information, such as whether media was present at the time of failure, media operations (loading, stopped, reading, writing, moving forward, moving in reverse, unloading), and compression (on/off, or compression ratio); servo information, such as servo trace (time tape was inserted, certain locations on tape), currents on the supply and take-up motor, take-up diameter, tach count, tape address, motor position, load motor state (unloaded, loading, loaded, unloading); and SCSI information, such as SCSI trace showing the requests and responses.

The device state for purposes of error analysis is typically stored in nonvolatile memory ("NVM"), so that it is preserved when the power is turned off. There are two main problems which create a desire for a new way of storing the device state to NVM. Often, there will be an original failure that puts the device in an undesirable state, and causes recordation of the device state to NVM. Because the device is in an undesirable state, subsequent power ups cause failures and these failures are then also recorded to NVM. Recordation of these subsequent failures typically pushes out (overwrites) the original failure from the NVM, which is of limited capacity. The failures that occurred after the original failure are usually byproducts of the original failure, and often do not hold the data necessary to determine the root cause.

It is desired to develop a method for recording device state in response to an error while avoiding these problems.

### SUMMARY OF THE INVENTION

One advantage of the algorithm of embodiments of the invention is that it helps ensure recordation of the state corresponding to a "root cause" or "original" error or a catastrophic failure that requires a failing device to be sent to the manufacturer, rather than just the state of a byproduct failure or the state of an unrelated failure. An "error" herein more broadly refers to any error or failure indicating lack of full functionality (e.g., a soft or hard error).

According to an embodiment of the invention, an apparatus for recording the state of a data storage device in response to a device error includes a controller, which, upon detection of an error (the "first device error"), causes recordation of the state of the device in nonvolatile memory. If the device error follows a first device error, the controller determines whether a usage metric has been satisfied. If the usage metric has been satisfied, the controller causes recordation of the state of the device in the nonvolatile memory.

If the usage metric has not been satisfied, the controller may cause recordation in nonvolatile memory that the subsequent device error has occurred, without causing recordation of the state of the device corresponding to the subsequent device error. Note that the use of the terms "subsequent," "following," or variations thereof, does not necessarily mean immediately subsequent or following.

If the usage metric has been satisfied, the recordation of the subsequent device state may overwrite all or some of the device state recorded in response to the first device error. Alternatively, in another embodiment, if the usage metric has been satisfied, the recordation of the device state does not overwrite any of the device state recorded in response to the first device error.

If the usage metric has not been satisfied and the subsequent device error is a first subsequent error immediately following the first device error, the controller may cause recordation of the state of the device corresponding to the first subsequent device error. In another embodiment, if the usage metric has not been satisfied and the subsequent device error is a second subsequent device error immediately following the first subsequent device error, the controller does not cause recordation of the state of the device corresponding to the second subsequent device error.

The usage metric may be selected based upon the likelihood that satisfaction of the usage metric indicates that the device will operate successfully after recording the state of the device in response to the first device error. In other words, the usage metric may be selected based upon the likelihood that failure to satisfy the usage metric would prevent recordation of device errors derivative of the first device error.

The first device error may represent an undesired state of the data storage device; for example, a catastrophic failure. The first device error may, for example, represent a hardware or a software error.

The data storage device may, for example, be a tape drive, in which case, the usage metric may be based on headwear hours, e.g., eight headwear hours. In another example, the data storage device may be a tape library, in which case the usage metric may be based on tape carrier loads/unloads. In other examples, the usage metric may be based on up time, number of power cycles, real time, or data traffic.

### BRIEF DESCRIPTION OF THE DRAWINGS

Figure 1 illustrates a data storage device of an embodiment of the present invention.

Figure 2 illustrates an algorithm according to an embodiment of the present invention.

### DETAILED DESCRIPTION OF EXEMPLARY EMBODIMENTS

One potential solution to the problems described above would be to collect the state for only the first error or failure that the storage device encounters. This method is analogous to setting a mouse trap. If the trap catches the mouse the first time it tries to get the cheese, that is ideal. If, however, the trap is tripped and the mouse gets away, the trap has no way of trapping that mouse again. Analogously, it might be possible to reboot the device after the first failure and return to a known good state, i.e., allowing the user to continue using the device. If there is a catastrophic failure in the future which could not be solved by rebooting the device, no information on that failure would be stored under this scenario. Also, the original failure would probably not be relevant to the catastrophic failure that caused the user to return the device to the manufacturer.

Another potential solution is to record to NVM only the state for the latest failure that the storage device encounters. This method works if there is a failure that is consistent, e.g., a component fails and every time the device is rebooted the same failure occurs. However, if there are subsequent, different failures after the original failure, this method would only collect information on the latest subsequent failure, thus robbing the manufacturer/designer of the true root cause information.

A third potential solution is to record the state only for certain failures to NVM and never record again. This method would require that all failure scenarios be accounted for, which would be difficult to achieve. For example, if the device only recorded servo error information to NVM, there might be a firmware bug preventing the error to be registered as a servo error, thereby preventing the corresponding state from being saved to NVM. Additionally, the device would have the same problem as discussed above in regard to recording only the first failure.

For greater cost, it is possible to use a larger nonvolatile storage medium (such as more flash, a larger disk drive, etc) so that more than one state may be recorded. However, the need for an algorithm to determine when to store a state would still be needed because future devices would have more state information to save, which would limit the number of states that may be saved onto the storage medium. In other words, if a device increases the capacity of the storage medium to store multiple states, storage of the derivative failure information would still take up that space and push out the original failure information. The techniques described below avoid the disadvantages of these alternate solutions.

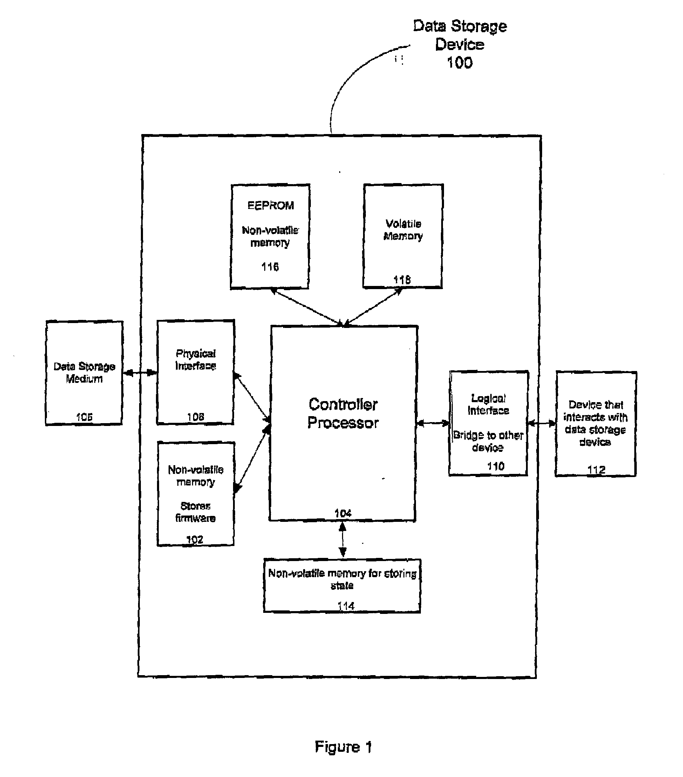

Figure 1 illustrates a data storage device 100 incorporating the algorithm of embodiments of the invention. A nonvolatile memory 102 may store the firmware embodying the algorithm. A controller 104, in one embodiment, reads from the nonvolatile memory 102 and executes the algorithm. In an embodiment where the data storage device is a media drive such as a tape drive, the controller 104 also controls the reading and writing of data from and to a data storage medium 106 through a physical interface 108. In that case, the physical interface includes tape drive elements, such as read/write heads. In an embodiment where the data storage device is a tape library, the controller 104 controls the loading and unloading of tape cartridges in and out of tape drives in the library. In that case, the physical interface 108 includes library elements, such as the mechanics involved with the picker.

In an embodiment where the data storage device is a media drive such as a tape drive, an optional servo processor may control positioning of read/write elements with respect to the storage medium. In that case, the physical interface 108 also includes the electro-mechanical control elements controlled by the servo processor for positioning the read/write elements. The servo processor may share the same chip as the controller 104.

A logical interface 110 allows the controller 104 to interact with another element 112, such as a customer computer for allowing a user to control the operations of the data storage device 100. In an embodiment where the data storage device is a media drive on a network, the element 112 may comprise a network router or switch.

A nonvolatile memory (NVM) 114, such as flash memory, stores the state of the data storage device in response to an error, according to an embodiment of the present invention. Another nonvolatile memory 116, such as an EEPROM, stores lifetime, i.e., history, information for the data storage device. If the storage device is a tape drive into which a tape has been loaded, the drive reads its directory, which represents the tape's history. The NVM 116 may then store information regarding past drives into which the tape has been loaded, actions performed on that tape, highest tracks accessed, and number of loads of the tape. Those skilled in the art will recognize that NVM 114 and NVM 116 may be combined into a single NVM.

Volatile memory 118, such as a ring buffer, may store information in response to print statements in the firmware as processes are executed within the data storage device. The print statements provide information as to which tasks are being executed, the state of different variables, time stamp, servo data, and read/write status. When an error occurs, the contents of the ring buffer help trace the cause of the error. The ring buffer may hold any information that the system designer believes useful for this objective. Volatile memory 118, which may also optionally include SDRAM, may store information regarding mechanical positions, such as head position on a tape/disk, motor positions, tach positions, etc.

Similarly, registers may be located in the same volatile memory 118 as the ring buffer. The registers may store state information from peripheral devices, such as temperature or humidity.

According to an embodiment of the invention, in response to a first error causing an undesired state, the controller 104 will cause selected information to be retrieved from different memory locations (e.g., NVM 116, volatile memory 118) and stored as state information in nonvolatile memory 114. The error may place the data storage device 100 in an unrecoverable state.

The information stored may be device history information such as list of commands executed, types of tape loaded, how long the device has been operational, how many errors have occurred, how many times the device has been cleaned, average performance, read/write value when the error occurred, etc. The memory 114 may also store drive information, such as presence of the media at the time of failure, operations performed on the media (loading, stopped, reading, writing, moving forward/reverse, unloading), compression on/off status, etc. Moreover, the memory may store servo information occurring just prior to the error, such as servo trace (tape insertion time, locations of selected data on tape), currents on the supply and take-up motor, take-up diameter, tach count, tape address, motor position, load motor state (unloaded, loading, loaded, unloading), and SCSI information, including SCSI trace showing the requests and responses.

NVM 114 typically is expensive and limited in capacity. In one embodiment, device state information can occupy all or a large portion of NVM 114 or other memory/storage dedicated to storing the state ("state memory"). It is thus important to avoid writing over state information that would help in tracing the root cause of a selected error (the "original error") with state information that represents an error that is perhaps derivative of the original error. In one embodiment, the algorithm prevents such information from being overwritten by allowing recordation of state information in state memory only upon satisfaction of a usage metric.

As another option, the algorithm of the invention can store in NVM 114 only state information that is relevant to the device error, or, stated otherwise, avoid storing state information that is of little or no relevance to the error. For example, if the error is a dropped leader, the algorithm may collect and store all the servo related and ring buffer state information, but not store SCSI information. Or, if the error is a SCSI error, the algorithm may store the entire ring buffer and SCSI traces, but not any of the servo information.

There could also be a generic collection that would gather information for a baseline state if the requested data collection is not explicitly stated. The baseline state would represent a limited selection of many different types of information, such as the last 1000 entries of the ring buffer rather than the entire ring buffer, the last ten SCSI commands, etc., to help better understand the device error.

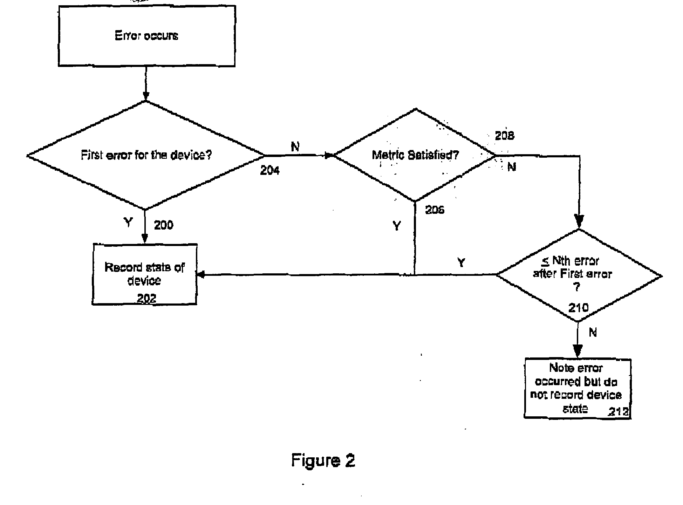

Figure 2 is a flow diagram illustrating an embodiment of the algorithm of the invention for a data storage device. If the controller detects that a first device error has occurred (200), then the controller stores in NVM 114 the state of the device (202). A "first device error" or "first error" is the first error that occurs in time while no state corresponding to a device error ("device error state") is currently stored (e.g., NVM does not currently hold any device error states), the objective being to record device error states that correspond to independent; original errors that are not derivative of other errors.

Please note that the state can be recorded into solid state NVM or other memory/storage within or associated with the device, or, alternatively, removable media, or a storage device on a network including the data storage device, for example. Storing the state may overwrite the previous state stored in the NVM 114. Alternatively, if there is enough space, the controller may store the state without overwriting the previous state. The latter option allows the NVM 114 to store multiple states related to "root causes."

If the controller detects that the error is not the first device error, then the controller determines whether a usage metric is satisfied. If the metric is satisfied (206), then the controller causes the state of the device to be recorded in NVM (202), even if this may, in one embodiment, write over a previously recorded state.

Conversely, if the metric is not satisfied, then, in one embodiment, the controller may determine not to store the state corresponding to any device errors subsequent to the first device error. Alternatively, in another embodiment, the controller may allow storage of up to N states corresponding to up to N device errors immediately following the first device error.

If the former embodiment is implemented, then step 210 is not implemented. In that case, the controller does not store the device state, but may instead record in event memory 116 that the error has occurred (212). In this case, the error may be a derivative of the first device error recorded, in which case recordation of the state would generally not be as helpful in diagnosing the cause of the error as analysis of the state of the drive at the time of the original first device error.

If, however, the latter embodiment including step 210 is implemented, then the controller will determine whether the device error is the first, second, ..., or Nth error immediately following the first device error. If so, the controller causes the state corresponding to the subsequent device error to be recorded in NVM 114 (202). If not, e.g., the device error is the N+1th subsequent error, then the controller may just record in event memory 116 that the subsequent error has occurred (212).

The selected metric is a quantifiable value which aids in determining whether a device is successfully operating. For one embodiment, based on experimentation, the usage metric may be selected based upon the likelihood that satisfaction of the usage metric indicates that the data storage device will operate successfully after recording the state of the device in response to the first device error. Alternatively or put another way, for one embodiment, the usage metric may be selected based on the likelihood that satisfaction of the usage metric indicates that recordation of device errors derivative of the first device error will be avoided.

The metric is device-dependent and could exclusively be one metric or a combination of metrics such as up time (time that the device has been powered up), power cycles (number of times a device has been turned on/off), real time (# of seconds (or multiples of seconds to form minutes, hours, days, etc)), traffic (amount of information that has been passed back and forth between devices), etc.

For a tape drive, the metric may be headwear hours because only a fully functional drive can read and write, which increments the headwear hours. A conservative value of eight headwear hours may be employed so that there would be little doubt that the drive has been successfully working. As an alternative, the metric may be a weighted average of headwear hours and power up time.

Other data storage devices may employ different metrics based on their primary function. For example, a loader (or library) loads/unloads tapes. Thus, one of its metrics might be a certain number of load/unloads to ensure that it works correctly.

A network device sends and receives data (traffic) so it may employ the amount of traffic sent/received as its metric, or a weighted average of traffic and power up time.

As another example, a device that merges a tape drive with a hard drive may employ a combination of metrics which include headwear hours for both the tape drive and the hard disk, as well as possibly the amount of data sent/received to the system.

Some examples based upon different types of errors are as follows:

### Detached leader on a tape drive

A tape is inserted into a tape drive and a detached leader occurs as the first error for the drive. Since this is the first error, the state of the drive is recorded. Some of the state information recorded might include the number of tach revolutions, the motor hall sensor counts, whether the inserted tape was a valid tape, and if the load ring completed its movement. This state information would aid in determining the buckle location because if enough drives are returned for servicing with the buckle in the same location, the tape path may need to be modified.

Because the drive would not be working for the user, the user may attempt to power cycle the drive multiple times before realizing the drive is in a nonrecoverable state. Power cycling will start the drive in a new state and the drive will behave differently than it did during the previous operation. For example, before the original (now recorded) error, a cartridge was inserted into the drive and now it is not. Thus, the normal drive operations (and the corresponding controller code) will follow a different path. Because the leader is still detached, an error will occur.

Because the main function of a tape drive is to write/read onto tape, the logical metric for tape drives is headwear hours. Once a certain number of headwear hours have elapsed since the previous error occurred, such as, for example, eight headwear hours, it can be safely assumed that the tape drive was again engaging heads to tape, and is thus operational.

However, because the drive in this example is not working and a tape is not inserted, it is impossible for the heads to engage with a tape. Thus, it is impossible for the drive to satisfy the metric requirement. In this case, the controller will simply note any subsequent error but not record the state of the device.

Perhaps, however, the customer has the means to fix the detached leader problem. After the problem is fixed, the drive would again operate properly. After successful read/write operation for eight hours, the usage metric would be satisfied. According to an embodiment of the algorithm of the invention, the controller would thus again be ready to capture a new error and record the state of the drive.

### Failure to unbuckle

A failure to unbuckle error occurs when a tape is not successfully ejected, and the buckle of the tape remains connected to the leader of the drive. When this happens, the state of the drive could be recorded and data could be collected which assists the manufacturer in determining why the drive failed to unbuckle.

After a failure to unbuckle, the customer might pull on the tape to remove it, which could result in a damaged and detached leader. According to an embodiment of the invention, the recording is "locked" and the true failure, the failure to unbuckle, is not overwritten because a usage metric representing, for example, the likelihood of successful operation after the failure occurs is not satisfied.

### A tape loader/library pushes excessively while inserting a tape

This example assumes that a tape is inserted into a library. While inserting a tape into a drive, the picker might push on the tape longer than allowed by specifications, thereby causing the drive to be unable to engage the tape correctly.
The tape may get stuck in the drive, creating an error. The drive error would be propagated to the loader because the loader would now be unable to unload the stuck tape, and load other tapes in that drive. If this is the first error, the controller would record the state of the library in response to this error. The state may include a flag that the loader had just inserted a tape, as well as the amount of time the picker held the tape in the drive.

If the loader is power-cycled, the loader could start from a new state and grab another tape which it would try to insert into the drive. This would cause another error (since a tape is already present). In one embodiment of the invention, after checking a metric (such as number of loads) and not meeting it, the loader would simply note the error that occurred as a derivative error without recording the state.

### Snapped tape on a tape drive

Excessive force provided by the supply or take-up motor may tear the tape. When this occurs, the tachometer in the drive will stop changing value since there is no tape tension causing it to turn. In response, the controller may record the state of the drive, including information such as how much tape was on the take-up reel, the velocity of the motors, and the software trace.

If the cartridge is not ejected, a subsequent power-cycle would cause an error because the tape tension is not correct and the cartridge would be ejected. If a customer attempted to load another cartridge, another error would occur because the drive would not be able to buckle the media and load. According to an embodiment of the invention, the controller would record the original error, but not record the two derivative errors because the usage metric is not satisfied.

### Failure to buckle on tape drives

The supply motor is the motor that resides on a tape drive underneath the location where a tape is inserted. The supply motor turns the reel on a cartridge and along with the take-up motor, moves tape. In some cases, it is possible to have the supply motor fail when a tape is loaded. This prevents the tape drive leader to successfully buckle with the tape. The controller would cause the state of the drive to be recorded in response to this error. Derivative failures could include detached leader errors or failure to unbuckle error, which would not be recorded, according to an embodiment of the invention relying upon satisfaction of a usage metric.

### A disk to disk to tape (DDT) system

A DDT system generally consists of two disk drives (though there could only be only one) and a tape drive. In this example, assume a disk drive is writing to tape and the disk drive crashes. The controller according to an embodiment of the invention would record the state of the system in response to this error.

If the user/customer does not notice that the disk drive crashed, the user might power cycle the system and attempt a reading of the tape. The reading could fail since the tape would have the equivalent of a hard write. Intelligence could be built into the DDT system so that it is recognized that there previously was a crash which caused a bad tape and that the current read failure is a result of the original failure, and thus need not be recorded.

Although the invention has been described in conjunction with particular embodiments, it will be appreciated that various modifications and alterations may be made by those skilled in the art without departing from the spirit and scope of the invention. One of ordinary skill in the art will recognize that the embodiments need not be mutually exclusive, and that, where appropriate, features from one embodiment may be combined with features from another. The invention is not to be limited by the foregoing illustrative details.

## Claims

1. A method of recording the state of a data storage device in response to a device error, the method comprising:
if a device error is a first device error, recording the state of the device;
if the device error is subsequent to the first device error,
determining whether a usage metric has been satisfied; and
if the usage metric has been satisfied, recording the state of the device.

2. The method of claim 1, further comprising:
if the usage metric has not been satisfied, recording that the subsequent device error has occurred but not recording the state of the device corresponding to the subsequent device error.

3. The method of claim 1, further comprising:
if the usage metric has not been satisfied and if the subsequent device error is a first subsequent error immediately following the first device error, recording the state of the device corresponding to the first subsequent device error.

4. The method of claim 3, further comprising:
if the usage metric has not been satisfied and if the subsequent device error is a second subsequent device error immediately following the first subsequent device error, not recording the state of the device corresponding to the second subsequent device error.

5. The method of claim 1, wherein, if the usage metric has been satisfied, the recordation of the device state overwrites all or some of the device state recorded in response to the first device error.

6. The method of claim 1, wherein, if the usage metric has been satisfied, the recordation of the device state does not overwrite the device state recorded in response to the first device error.

7. The method of claim 1, wherein the state of the device is recorded in nonvolatile memory.

8. The method of claim 1, wherein the usage metric is selected based upon the likelihood that satisfaction of the usage metric indicates that the device will operate successfully after recording the state of the device in response to the first device error.

9. The method of claim 1, wherein the usage metric is selected based upon the likelihood that failure to satisfy the usage metric would prevent recordation of device errors derivative of the first device error.

10. The method of claim 1, wherein only state information relevant to the device error is recorded.

11. The method of claim 1, wherein the first device error represents an undesired state of the data storage device.

12. The method of claim 1, wherein the first device error represents a software error.

13. The method of claim 1, wherein the first device error represents a hardware error.

14. The method of claim 1, wherein the first device error represents a catastrophic failure of the data storage device.

15. The method of claim 1, wherein the data storage device is a tape drive.

16. The method of claim 15, wherein usage metric is based on headwear hours.

17. The method of claim 16, wherein the usage metric is eight headwear hours.

18. The method of claim 1, wherein the device is a tape library.

19. The method of claim 1, wherein the usage metric is based on tape carrier loads/unloads.

20. The method of claim 1, wherein the usage metric is based on up time.

21. The method of claim 1, wherein the usage metric is based on number of power cycles.

22. The method of claim 1, wherein the usage metric is based on real time.

23. The method of claim 1, wherein the usage metric is based on data traffic.

24. An apparatus for recording the state of a data storage device in response to a device error, the apparatus comprisinga controller for:
if a device error is a first device error, causing recordation of the state of the device;
if the device error is subsequent to the first device error,
determining whether a usage metric has been satisfied; and
if the usage metric has been satisfied, causing recordation of the state of the device.

25. The apparatus of claim 24, wherein, if the usage metric has not been satisfied, the controller causes recordation of the subsequent device error but does not cause recordation of the state of the device corresponding to the subsequent device error.

26. The apparatus of claim 24, wherein, if the usage metric has been satisfied, the recordation of the device state overwrites all or some of the device state recorded in response to the first device error.

27. The apparatus of claim 24, wherein if the usage metric has not been satisfied and if the subsequent device error is a first subsequent error immediately following the first device error, the controller causes recordation of the state of the device corresponding to the first subsequent device error.

28. The apparatus of claim 27, wherein if the usage metric has not been satisfied and if the subsequent device error is a second subsequent device error immediately following the first subsequent device error, the controller does not cause recordation of the state of the device corresponding to the second subsequent device error.

29. The apparatus of claim 24, wherein, if the usage metric has been satisfied, the recordation of the device state does not overwrite the device state recorded in response to the first device error.

30. The apparatus of claim 24, wherein the state of the device is recorded in nonvolatile memory.

31. The apparatus of claim 24, wherein the usage metric is selected based upon the likelihood that satisfaction of the usage metric indicates that the device will operate successfully after recording the state of the device in response to the first device error.

32. The apparatus of claim 24, wherein the usage metric is selected based upon the likelihood that failure to satisfy the usage metric would prevent recordation of device errors derivative of the first device error.

33. The apparatus of claim 24, wherein only state information relevant to the device error is recorded.

34. The apparatus of claim 24, wherein the first device error represents an undesired state of the data storage device.

35. The apparatus of claim 24, wherein the first device error represents a software error.

36. The apparatus of claim 24, wherein the first device error represents a hardware error.

37. The apparatus of claim 24, wherein the first device error represents a catastrophic failure of the data storage device.

38. The apparatus of claim 37, wherein the data storage device is a tape drive.

39. The apparatus of claim 38, wherein usage metric is based on headwear hours.

40. The apparatus of claim 24 wherein the usage metric is based on eight headwear hours.

41. The apparatus of claim 24, wherein the data storage device is a tape library.

42. The apparatus of claim 24, wherein the usage metric is based on tape carrier loads/unloads.

43. The apparatus of claim 24, wherein the usage metric is based on up time.

44. The apparatus of claim 24, wherein the usage metric is based on number of power cycles.

45. The apparatus of claim 24, wherein the usage metric is based on real time.

46. The apparatus of claim 24, wherein the usage metric is based on data traffic.

47. A computer program product, comprising computer program code adapted, when said program is loaded onto a computer, to make the computer execute the procedure of any one of claims 1 to 23.
